(19)

Europäisches
Patentamt
European
Patent Office
Office européen
des brevets

(11)     EP 2 292 815 B1

(12)                    **EUROPEAN PATENT SPECIFICATION**

(45) Date of publication and mention
of the grant of the patent:
**05.12.2012 Bulletin 2012/49**

(51) Int Cl.:
***D01F 2/00*** *(2006.01)*     ***D01F 6/50*** *(2006.01)*
***D01F 1/02*** *(2006.01)*     ***D01F 1/10*** *(2006.01)*

(21) Application number: **10013555.7**

(22) Date of filing: **26.12.2007**

(54) **Composite fiber of cellulose-polyvinylalcohol and preparation method thereof**

Verbundfaser aus Cellulose-Polyvinylalkohol und Herstellungsverfahren dafür

Fibre composite de cellulose-polyvinylalcohol et procédé de préparation associé

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **26.12.2006 KR 20060133760**

(43) Date of publication of application:
**09.03.2011 Bulletin 2011/10**

(62) Document number(s) of the earlier application(s) in
accordance with Art. 76 EPC:
**07851785.1 / 2 097 563**

(73) Proprietor: **Kolon Industries, Inc.
Kyungki-do 427-709 (KR)**

(72) Inventors:
• **Oh, Young-Se
Buk-gu
Busan, 616-120 (KR)**

• **Kim, Gi-Woong
Suseong-gu
Daegu, 706-010 (KR)**
• **Kim, Woo-Chul
Gyeongsangbuk-do, 730-799 (KR)**
• **Kim, Si-Min
Dalseo-gu
Daegu 704-140 (KR)**

(74) Representative: **TER MEER - STEINMEISTER &
PARTNER GbR
Patentanwälte
Mauerkircherstrasse 45
81679 München (DE)**

(56) References cited:
**EP-A2- 0 438 635      KR-A- 20050 003 124**

EP 2 292 815 B1

Description

## BACKGROUND OF THE INVENTION

### (a) Field of the Invention

The present invention relates to a method of preparing a cellulose/polyvinylalcohol composite fiber.

### (b) Description of the Related Art

Cellulose has a crystalline structure that is constructed by strong hydrogen bonds between molecular chains or the interior of the molecular chain, and thus it is difficult to dissolve the cellulose with a common solvent. Generally, N-methylmorpholine-N-oxide (hereinafter "NMMO"), which is capable of destroying the crystalline structure, is used as a solvent for dissolving cellulose.

A process of preparing a cellulose fiber by using a solution, wherein the cellulose is dissolved in the NMMO, has benefits of less energy consumption and less use amount of water, in comparison with a general process of preparing polyester and viscose rayon, because the NMMO can be recycled. Furthermore, unlike the viscose rayon process, the process using the NMMO has less problems of air pollution or water pollution, because the NMMO is atoxic and nearly all of the NMMO can be recovered and recycled

U.S. Patent No. 2,179,181 (Graenacher et al.) firstly suggested such a method of preparing the cellulose fiber, and the following technologies are known as conventional methods of preparing the cellulose solution by using the NMMO solvent.

U.S. Patent Nos. 4,142,913 and 4,144,080 suggested a method of dissolving the cellulose by mixing cellulose pulp sheets with the NMMO solvent (the percentage of water content: 22 wt%) and swelling them, and then eliminating the excess water included in the composition by distillation. The method can provide settled working conditions, because the cellulose is previously swelled sufficiently, and then the solution, which can be fiberized, is prepared by distilling water under a decompressed condition in the method. However, the method needs a long dissolving time and have some disadvantages in that the cellulose decomposes and the NMMO discolors.

U.S. Patent No. 4,211,574 discloses a method of preparing the solution by dipping pulp sheets in the liquefied NMMO solvent (water content: 15 wt%) at 85-95 °C, which is over the boiling point thereof, swelling them, and then stirring and heating them without thickening. The method, however, has a disadvantage in that a homogeneous solution cannot be prepared because gel films are formed on the surface of the pulp sheets, and the gel films prevent the NMMO solvent from penetrating into the pulp sheets.

U.S. Patent No. 5,584,919 discloses the method of preparing the solution by milling and blending the solid state NMMO (melting point: 78°C) and the pieces of the cellulose pulp in a mill at 50-60 °C so as to make pelletized mixed granules, and introducing the granules into an extruder so as to prepare the solution. The method, however, has a disadvantage in that it is difficult to prepare and handle the solid state NMMO and it is also difficult to apply the method to a continuous process.

Furthermore, the following technologies are known as methods of preparing the cellulose fiber by using cellulose, NMMO solvent, and a polymer resin.

U.S. Patent Nos. 3,447,939, 3,508,941, and 4,255,300 suggested the methods of preparing the cellulose fiber by using a solution wherein the cellulose and the polyvinylalcohol (PVA) are dissolved in the NMMO.

Furthermore, U.S. Patent No. 6,245,837 discloses that the fibers having the strength of 27cN/tex can be made by dissolving the cellulose and a mixture of polyethylene, polyethyleneglycol, polymethylmethacrylate, polyacrylamide, and the like into the NMMO. However, the method has a disadvantage in that the strength of the cellulose fibers prepared by the method is too low to be used for a common industry or a tire cord.

Korean Patent Publication No. 2005-0003124 discloses the cellulose/polyvinylalcohol composite fiber prepared by blending 0.1 to 30 wt% of polyvinylalcohol with cellulose. However, the method cannot be applied to an industrial application because the polyvinylalcohol blended in the dope is eluted into the washing bath and it is difficult to recycle the NMMO.

## SUMMARY OF THE INVENTION

It is an aspect of the present invention to provide a method of preparing a cellulose/polyvinylalcohol composite fiber satisfying the properties needed for an industrial fiber in which the elution rate of polyvinylalcohol is low during the washing process and it is easy to collect and recycle the solvent.

In order to attain these objects, the present invention provides a method of preparing a cellulose/polyvinylalcohol composite fiber, including the steps of:

i) preparing a dope including cellulose and polyvinylalcohol in a weight ratio of 70:30 to 99:1 by dissolving a powder mixture of cellulose and polyvinylalcohol into N-methylmorpholine-N-oxide;

ii) extrusion spinning the dope through spinning nozzles;

iii) cross-linking and solidifying the spun composite filaments at a temperature of from 5 to 35 °C, wherein the cross-linking and solidifying are carried out in a solidifying bath containing a cross-linking agent included in the amount of from 0.1 to 1 wt% in the solidifying liquid of the bath; and

iv) washing the cross-linked and solidified filaments

According to the present invention, the elution rate of polyvinylalcohol is preferably 5% or less in step iii) of washing.

## DETAILED DESCRIPTION OF THE EMBODIMENTS

Hereinafter, the present invention is explained in more detail.

The present inventors identified that the polyvinylalcohol is not eluted and the solvent can be collected and recycled, and it is possible to prepare a composite fiber having good strength, elongation, and flexibility by granting some properties to polyvinylalcohol, which is used for preparing the cellulose fiber, or by using a cross-linking agent in the solidifying step after spinning the dope, and then accomplished the present invention.

Such method of the present invention is characterized by using polyvinylalcohol of which the content of a syndiotactic diad groups is from 53 to 60%, the viscosity-average degree of polymerization is from 1500 to 7000, and the degree of saponification is at least 99.0%, so as to prepare the cellulose/polyvinylalcohol composite fiber.

Furthermore, the present invention provides a method of preparing a cellulose/polyvinylalcohol composite fiber, wherein the composite fiber is prepared by adding a cross-linking agent in a solidifying step, after spinning the dope in which polyvinylalcohol and cellulose are blended.

Hereinafter, the cellulose/polyvinylalcohol composite fiber and the method of preparing the same are explained.

The cellulose/polyvinylalcohol composite fiber includes cellulose and polyvinylalcohol.

The powders of cellulose and polyvinylalcohol, which are raw materials of the composite fiber, can be used by mixing them with each other. At this time the cellulose and the polyvinylalcohol are mixed in a weight ratio of 70:30 to 99:1. Namely, the polyvinylalcohol is included in an amount of 1 wt% or more so that the composite fiber has the properties needed for the present invention, and the polyvinylalcohol is included in an amount of 30 wt% or less so as to prevent the deterioration of the properties caused by excess polyvinylalcohol because the miscibility of the two components is poor.

Conventional cellulose in the related art of the present invention may be used as the cellulose, however the content of $\alpha$-cellulose is preferably at least 94%, more preferably at least 96%, and southern pine pulp having at least 96% of $\alpha$-cellulose and the wood pulp having at least 96% of $\alpha$-cellulose may be most preferably used for improving the properties of the composite fiber.

Particularly, it is preferable to use the polyvinylalcohol, of which the content of syndiotactic diad groups is from 53 to 60%, in the present invention.

The content of syndiotactic diad groups of the polyvinylalcohol can be measured by $^1$H-NMR spectrum and calculated according to the following Equation 1. In the NMR spectrum, three peaks presented between 4-5 ppm are the peaks of hydroxyl group (-OH), and the peak at 4.65 ppm represents an isotactic triad group (hereinafter "mm"), the peak at 4.43 ppm represents a heterotactic triad group (hereinafter "mr"), and the peak at 4.22 ppm represents a syndiotactic triad group (hereinafter "rr"). Herein, m means an isotactic diad and r means a syndiotactic diad. In the case of general PVA, mm=1, mr=2.28, and rr=1.40 in $^1$H-NMR, and thus the rate of mm is about 21.37%, the rate of mr is about 54.27%, and the rate of rr is about 29.91 %.

[Equation 1]

The content of syndiotactics (%) = (the rate of rr) + [0.5×(the rate of mr)].

Namely, the polyvinylalcohol is syndiotactic polyvinylalcohol, of which the content of syndiotactic diad groups is from 53 to 60%, and the syndiotactic polyvinylalcohol has better water- and chemical-resistance in comparison with the heterotactic polyvinylalcohol.

Furthermore, it is preferable that the degree of saponification of the syndiotactic polyvinylalcohol is at least 99.0 %. Namely, when the degree of saponification of the syndiotactic polyvinylalcohol does not satisfy the range, the water-resistance is poor and the polyvinylalcohol may be eluted into the washing bath, and thus it costs much to collect the NMMO.

Furthermore, the viscosity-average degree of polymerization is from 1500 to 7000 for the same reason above-mentioned.

As disclosed above, the polyvinylalcohol means the syndiotactic polyvinylalcohol, of which the content of syndiotactic diad groups is from 53 to 60% and the degree of saponification is at least 99.0 %.

Even though the degree of saponification of the syndiotactic polyvinylalcohol is 99.0% or more, when the content of the syndiotactic diad groups is less than 53%, the mixed polyvinylalcohol is eluted into the washing liquid during the washing process and thus it is difficult to collect the solvent and the properties needed for the present invention cannot be obtained. Furthermore, when the content of the syndiotactic diad groups is over 60% the tensile properties of the prepared fiber are good, however it is industrially disadvantageous because the flexibility of the fiber is poor and it is very expensive to prepare polyvinylalcohol of which the content of the syndiotactic diad groups is over than 60%.

A reference method of preparing the cellulose/polyvinylalcohol composite fiber includes the steps of: i) preparing a dope by dissolving a powder mixture of cellulose and synthiotactic polyvinylalcohol into N-methylmorpholine-N-oxide; ii) extrusion spinning the dope through spinning nozzles; and iii) washing the spun filaments.

In the reference method of preparing the composite fiber, except that the synthiotactic PVA is used, the composite fiber can be prepared by well-known methods in the related art of the present invention. Therefore, the method is not particularly limited, and the examples of the method are as follows.

First, the dope of step i) can be prepared by mixing a powder mixture of cellulose and polyvinylalcohol (hereinafter "a raw material mixture") and a solvent and dissolving them homogeneously. For example, the powders of cellulose and synthiotactic polyvinylalcohol are mixed in a weight ratio of 70:30 to 99:1. Subsequently, the homogeneous dope can be prepared by introducing the powder mixture of cellulose and polyvinylalcohol (hereinafter "a raw material mixture", feeding speed: 100 to 800 g/h) and the solvent (feeding speed: 1000 to 8000 g/h) into an extruder, and mixing, swelling, and dissolving the raw material mixture.

The solvent may be a conventional solvent in the related art of the present invention, and is not particularly limited. However, N-methylmorpholine-N-oxide (NMMO) can preferably be used.

At this time, the content of the solvent is preferably 300 to 1900 parts by weight based on 100 parts by weight of the raw material mixture, and more preferably 500 to 1200 parts by weight. Namely, it is preferable that the content of the solvent is 300 parts by weight or more based on 100 parts by weight of the raw material mixture, in order to dissolve the raw material mixture and prepare a homogeneous solution, and it is preferable that the solvent is included in an amount of 1900 parts by weight or less, considering the final properties of the fiber and the economic feasibility.

Furthermore, the water content in the solvent is preferably 7 to 15 wt%. Namely, the water content in the solvent is preferably 7 wt% or more so as to prevent elevation of the melting temperature of the solvent and the preparing temperature caused by the excessive water content, and the water content in the solvent is preferably 15 w1% or less so as to secure the minimum solubility and the swellability of the raw material mixture.

Particularly, it is preferable that the swelling and dissolving process of the raw material mixture is primarily proceeded by dispersing the raw material mixture in the solvent while controlling the water content in the solvent to be 10 to 50%, and then swelling and dissolving the raw material mixture at the same time with lowering the water content in the solvent to be 7 to 15%.

Subsequently, step ii) extrusion spinning the dope through spinning nozzles is carried out.

It is preferable that the temperature of the extruder is maintained at 40 to 130°C, and it is more preferable to use a twin-extruder having a feeding zone, a mixing zone, a dissolving zone, and a transferring zone. Herein, it is most preferable that the temperature of each zone of the twin-extruder is as follows: the feeding zone is at 90 °C; the mixing zone is at 100 °C; the dissolving zone is at 120 °C; and the transferring zone is at 110 °C.

Furthermore, in addition to the method of using the extruder, the method, that dissolves the raw material mixture in a thin film rectifier after mixing and swelling the raw material mixture in a kneader or a storage tank, can be used as the method of spinning the raw material mixture while dissolving the same homogeneously.

At this time, when the water content in the solvent is 7 to 15 wt%, it is preferable to dissolve the raw material mixture according to the above method, and when the water content in the solvent is 20 to 50 wt%, it is preferable to dissolve the raw material mixture by eliminating the excess water in a conventional thin film rectifier or a vacuum kneader, after swelling the raw material mixture in a kneader or a tank.

Subsequently, step iii) washing the filaments spun as the above statements is carried out. The washing step can be carried out according to the conventional method in the related art of the present invention and it is not particularly limited.

According to the reference methode, the elution rate of the polyvinylalcohol according to the following Calculation Formula is preferably 5% or less, considering the convenience of collecting and recycling the solvent after washing.

[Calculation Formula]

$$Elution\ rate(\%) = \frac{weight\ of\ eluted\ PVA\ in\ the\ washing\ bath}{weight\ of\ PVA\ in\ the\ mixture\ of\ raw\ material}$$

[0044] Namely, the reference method of preparing the cellulose/polyvinylalcohol composite fiber has an advantage that it is easy to collect and recycle the solvent, because the method uses the raw material mixture with the above content and thus the elution rate of polyvinylalcohol is low in the washing step.

[0045] The composite fiber prepared by the above method and with the content has dry strength of from 6 to 10 g/d, dry elongation of from 6 to 13%, and a dry modulus of from 150 to 400 g/d.

[0046] Furthermore, according to the present invention, the method of preparing the cellulose/polyvinylalcohol composite fiber is provided and explained in more detail hereinafter.

[0047] The method of preparing the composite fiber according to claim 1 of the present invention includes the steps of:

i) preparing a dope including cellulose and polyvinylalcohol in a weight ratio of 70:30 to 99:1;
ii) extrusion spinning the dope through spinning nozzles;
iii) cross-linking and solidifying the spun composite filaments; and
iv) washing the cross-linked and solidified filaments.

[0048] In the method of the present invention, the materials and the method used in the reference method can be used, except that a cross-linking agent is used in the solidifying process after spinning the dope.

[0049] Furthermore, in the case of the second embodiment using the cross-linking agent, the polyvinylalcohol may be a conventional PVA in the related art of the present invention and is not limited particularly as the first embodiment. However, the content of syndiotactic diad groups of the polyvinylalcohol, which is calculated from $^1$H-NMR and the Equation 1, is preferably 48 to 60%, and more preferably 50 to 56%. Namely, the method of preparing the composite fiber according to the present invention can prepare the composite fiber having equal properties, irrespective of the lower limit of the content of the syndiotactic diad group. However, the content of the syndiotactic diad groups is preferably 60% or less, because the flexibility of the fiber may deteriorate, when the content of syndiotactic diad groups is too high.

[0050] Furthermore, the polyvinylalcohol having the degree of saponification of at least 99.0% is used in the present invention in order to prevent the deterioration of the water-resistance and the orientation, and the elution of the polyvinylalcohol into the washing bath during the cross-linking and solidifying process of the composite fiber.

[0051] Furthermore, the viscosity-average degree of polymerization of the polyvinylalcohol is preferably from 1500 to 7000. Namely, the viscosity-average degree of polymerization of the polyvinylalcohol is preferably 1500 or more so as to satisfy the minimum properties needed for the composite fiber, and the viscosity-average degree of polymerization is preferably 7000 or less so as to prevent the deterioration of the flexibility of the composite fiber.

[0052] Furthermore, step iii) is carried out in the solidifying bath containing the cross-linking agent in order to cross-link the composite fiber.

[0053] It is preferable that the cross-linking agent has the minimum solubility to the solidifying liquid and good cross-linking reactivity to the hydroxyl group (-OH).

[0054] Preferably, at least one cross-linking agent selected from the group consisting of boric acid, epichlorohydrin, glutaraldehyde, and carboxylic acid may be used. As examples of the carboxylic acid, malonic acid, succinic acid, glutaric acid, adipic acid, suberic acid, azelaic acid, phthalic acid, isophthalic acid, 1,2,3,4-benzenetetracarboxylic acid, terephthalic acid, citric acid, tricarballylic acid, and 1,2,3,4-butanetetracarboxylic acid may be used.

[0055] The solidifying liquid is an aqueous solution containing the cross-linking agent and the solvent, and is not particularly limited, because the solidifying liquid can be prepared by the conventional composition in the related art of the present invention, except that the liquid further includes the cross-linking agent.

[0056] At this time, the cross-linking agent is included in the solidifying liquid in an amount of from 0.1 to 1 wt%. Namely, the cross-linking agent is included in the solidifying liquid in an amount of 0.1 wt% or more in order to cross-link the components of the composite fiber, and the cross-linking agent is included in an amount of 1 wt% or less considering economic feasibility according to the maximum degree of the cross-linking.

[0057] Furthermore, the cross-linking and solidifying of step iii) is carried out at a temperature of from 5 to 35 °C. That is the temperature of the solidifying liquid is 5 °C or more in order to secure the minimum cross-linking, and the temperature of the solidifying liquid is 35°C or less so as to prevent a decrease of the solidifying speed.

[0058] Furthermore, according to the present invention, the elution rate of polyvinylalcohol calculated by the following Calculation Formula is 1% or less in the washing step considering the convenience of collecting and recycling the solvent after washing.

[Calculation Formula]

$$Elution\ rate(\%) = \frac{weight\ of\ eluted\ PVA\ in\ the\ washing\ bath}{weight\ of\ PVA\ in\ the\ mixture\ of\ raw\ material}$$

That is, the method of preparing the cellulose/polyvinylalcohol composite fiber according to the present invention has an advantage in convenience of collecting and recycling the solvent, because the steps of solidifying and cross-linking the spun composite fiber are carried out at the same time before the washing step and thus the elution rate of polyvinylalcohol in the washing step is low.

The cellulose/polyvinylalcohol composite fiber according to the invention includes cellulose and polyvinylalcohol in a weight ratio of 70:30 to 99:1 and has dry strength of from 6 to 10 g/d, dry elongation of from 8 to 16%, and a dry modulus of 150 to 400 g/d, and particularly the dry elongation thereof is superior, because it is prepared by the above method.

Furthermore, a tire cord can be prepared by using the method of preparing the cellulose/polyvinylalcohol composite fiber having the above characteristics.

For example, the tire cord can be prepared according to the method of preparing a raw cord by twisting the cellulose/polyvinylalcohol composite fibers prepared by the above method with a twister, weaving the same with a weaving machine, and dipping the same into a dipping solution. The tire cord is not only prepared by the above method but is also prepared by a conventional method in the related art of the present invention.

As explained above, according to the present invention, it is possible to reduce the elution of polyvinylalcohol during the washing step and it is easy to collect and recycle the solvent by using the polyvinylalcohol having syndiotactic diad groups of a specific content or by cross-linking the components of the composite fiber with the cross-linking agent in the solidifying step of the spun composite fiber, and the composite fiber prepared by the method has good dry strength, dry elongation, and dry modulus.

Hereinafter, preferable examples and comparative examples are presented for understanding the present invention. However, the following examples are only for illustrating the present invention and the present invention is not limited to or by them.

**[Examples and Comparative Examples]**

**Example1** (Reference)

First, cellulose (the content of $\alpha$-cellulose was 96% or more; V-81, Buckeye Co.) sheets were introduced into a pulverizer equipped with a screen filter, and made into powder. Syndiotactic polyvinylalcohol powder was prepared by low-temperature radical polymerizing the monomer mixture containing vinylpivalate and vinylacetate in a molar ratio of 10:90 (refer to Won Seok Lyoo, et. al., Macromolecules 2001, 34, p2964-2972) and saponifying the same. Then, the content of syndiotactic diad groups in the polyvinylalcohol was 54%, the degree of polymerization thereof was 4000, and the degree of saponification thereof was 99.6%. The powder of cellulose and polyvinylalcohol was introduced into a mixer in a weight ratio of 95:5.

Subsequently, the mixed powder of cellulose and polyvinylalcohol (feeding speed = 660 g/h) and liquefied NMMO (89 °C, mono-hydrate, water content: 13%, feeding speed = 6000 g/h) were introduced into a twin-extruder (diameter of the screws (D) = 48mm, L/D = 52), the mixture was dissolved homogeneously with a screw speed of 120 rpm, and then the dissolved mixture was spun through the spinning nozzles (diameter: 0.2 mm, orifice: 1000 ea) in order to prepare the cellulose/polyvinylalcohol composite fibers.

**Example 2** (Reference)

The composite fibers were prepared substantially according to the same method as in Example 1 (Reference), except that the viscosity-average degree of polymerization of the syndiotactic polyvinylalcohol was 1700.

**Example 3** (Reference)

The composite fibers were prepared substantially according to the same method as in Example 1 (Reference), except that the weight ratio of the cellulose and the syndiotactic polyvinylalcohol was 80:20.

**Example 4** (Reference)

The composite fibers were prepared substantially according to the same method as in Example 1 (Reference), except that the weight ratio of the cellulose and the syndiotactic polyvinylalcohol was 90:10.

**Comparative Example 1**

The composite fibers were prepared substantially according to the same method as in Example 1 (Reference), except that only the cellulose was used as the raw material without blending the syndiotactic polyvinylalcohol.

**Comparative Example 2**

The composite fibers were prepared substantially according to the same method as in Example 1 (Reference), except that the polyvinylalcohol (C-17L, Shin-Etsu Co.), of which the content of syndiotactic diad groups was 49.6%, the viscosity-average degree of polymerization was 1700, and the degree of saponification was 99.7%, was used.

**Comparative Example 3**

The composite fibers were prepared substantially according to the same method as in Example 1 (Reference), except that the weight ratio of the cellulose and the syndiotactic polyvinylalcohol was 99.5:0.5.

**Comparative Example 4**

The composite fibers were prepared substantially according to the same method as in Example 1 (Reference), except that the weight ratio of the cellulose and the syndiotactic polyvinylalcohol was 65:35.

**Comparative Example 5**

The composite fibers were prepared substantially according to the same method as in Example 1 (Reference), except that the degree of saponification of the syndiotactic PVA was 89%.

**[Experimental Example 1]** (Reference)

The properties of the polyvinylalcohol used and the cellulose/polyvinylalcohol composite fibers prepared in Examples 1-4 (Reference) and Comparative Examples 1-5 were measured according to the following methods, and the results are listed in Table 1.

**Properties of the Polyvinylalcohol**

**1) viscosity-average degree of polymerization ($DP_w$)**

First, the intrinsic viscosity ($\eta_{sp}$) was measured by using an Ubbelohde Viscometer (No.1, Fisher Corporation). At this time, dimethyl sulfoxide (DMSO) was used as a solvent, and the test was carried out at a temperature of $25\pm0.01$ °C between the viscosity range of 0.1 to 0.6 g/dℓ, and the intrinsic viscosity ($\eta_{sp}$) was calculated from the concentration (C) and the specific viscosity ($r_{sp}$) according to the following Equation 2.

Subsequently, the viscosity-average degree of polymerization ($DP_w$) was calculated from the intrinsic viscosity ($\eta_{sp}$) data measured by the method according to the Mark-Houwink equation of the following Equation 3 (refer to M. Marx, Makromol. Chem., 16,157(1955); J. Brandrup, E. H. Immergut, Polymer Handbook (3rd edition), Vol 144, Wiley-Interscience, New York, 198):

$$[\text{Equation 2}]$$

$$\eta_{sp} = \lim_{c \to 0} \frac{r_{sp}}{C}$$

$$[\text{Equation 3}]$$

$$\eta_{sp} = K_m \times (DP_w)^a$$

In Equation 3, $K_m$ and a are constants that are determined according to the kinds of the polymer and the solvent, and $K_m = 0.98 \times 10^{-2}$ and a=0.9 in the case of polyvinylalcohol and the DMSO solvent.

**2) degree of saponification**

$^1$H-NMR spectrum peaks were measured by using a $^1$H-NMR spectrometer at room temperature after dissolving polyvinylalcohol into DMSO solvent, and the degree of saponification (DS) was calculated according to the following Eqaution 4.

[Equation 4]

$$DS(\%) = \frac{PVA(CH_2\,peak)}{PVA(CH_2\,peak) + PVAc(CH_2\,peak)} \times 100$$

**Properties of the Composite Fiber**

The following properties of the cellulose/polyvinylalcohol composite fibers prepared by Examples 1-4 (Reference) were measured after conditioning the same at 25°C and 65 RH% for 24 hours.

**1) elution rate of the polyvinylalcohol**

A solution (50g) that was prepared by dissolving the mixture of cellulose and polyvinylalcohol in the monohydrate NMMO with a content of 12 wt% in the reaction bath of 120°C was solidified in pure water (200g) for 2 hours, and after filtering the remaining solution with a G4 glass filter and leaving the solution at room temperature (25 °C) for 1 hour, the elution rate of polyvinylalcohol was evaluated by measuring the transmittance by using a UV-Visible spectrometer.

Then, after measuring the transmittance of a remaining solution, which was blank-tested with 12 wt% of cellulose and offsetting the transmittance to 100%, the transmittance of the remaining solution obtained from the mixture of cellulose and polyvinylalcohol was measured. It was determined that more polyvinylalcohol was eluted when the transmittance was low, and the elution rate was calculated according to the following Calculation Formula.

[Calculation Formula]

$$Elution\,rate(\%) = \frac{weight\,of\,eluted\,PVA\,in\,the\,washing\,bath}{weight\,of\,PVA\,in\,the\,mixture\,of\,raw\,material}$$

**2) dry strength, dry elongation, and dry modulus**

After drying specimens at 110 °C for 2 hours to be under the official regain, the dry strength, the dry elongation, and the dry modulus were measured according to the KSK0412 standard with a tensile speed of 300 m/min by using a tensile tester of a low speed elongation type (Instron Co.), wherein the specimens had 8 turns per 10 cm, and the length thereof was 250 cm.

[Table 1]

| classification | | Example 1* | Example 2* | Example 3* | Example 4* | Comparative Example 1 | Comparative Example 2 | Comparative Example 3 | Comparative Example 4 | Comparative Example 5 |
|---|---|---|---|---|---|---|---|---|---|---|
| Weight ratio of cellulose /PVA | | 95/5 | 95/5 | 80/20 | 90/10 | 100/0 | 95/5 | 99.5 /0.5 | 65/35 | 95/5 |
| PVA | Content of diad groups (%) | 56.0 | 56.6 | 56.0 | 56.0 | - | 49.6 | 56.0 | 56.0 | 56.0 |
| | Degree of saponification (%) | 99.6 | 99.6 | 99.6 | 99.6 | - | 99.6 | 99.6 | 99.6 | 89.0 |
| | Degree of polymerization (DPw) | 4,000 | 1,700 | 4,000 | 4,000 | - | 1,700 | 4,000 | 4,000 | 4,000 |
| Elution rate of PVA (%) | | 0 | 0 | 0 | 0 | 0 | 20 | 0 | 0 | 26 |
| Dry strength (g/d) | | 7.7 | 7.2 | 8.2 | 8.0 | 6.0 | 6.3 | 6.0 | 5.4 | 5.2 |
| Dry modulus (g/d) | | 140 | 139 | 150 | 136 | 136 | 140 | 136 | 130 | 130 |
| Dry elongation (%) | | 8.2 | 7.8 | 8.9 | 8.5 | 5 | 7.9 | 5.1 | 5.5 | 8.4 |
| Industrial value High: ◎ Middle: O Low: Δ | | ◎ | ◎ | ◎ | ◎ | O | Δ | Δ | Δ | Δ |
| * (Reference) | | | | | | | | | | |

EP 2 292 815 B1

As shown in Table 1, Examples 1-4 (Reference) did not show whitening of the solidifying liquid and the composite fibers thereof had good properties that are suitable for a tire cord, because the syndiotactic PVA having syndiotactic diad groups of 53 to 60% and the degree of saponification of 99.0% or more was mixed with cellulose. However, in the case of Comparative Example 2 using the conventional heterotactic polyvinylalcohol, it was difficult to collect the NMMO because whitening of the solidifying liquid occurred in the solidifying bath, although the properties of the fiber were good.

### Example 5

First, cellulose (the content of $\alpha$-cellulose was 96% or more; V-81, Buckeye Co.) sheets were introduced into a pulverizer equipped with a screen filter, and made into powder. Polyvinylalcohol powder, of which the degree of polymerization was 4000 and the degree of saponofication was 99.6%, was used. The cellulose and the polyvinylalcohol were introduced into a mixer in a weight ratio of 95:5.

Subsequently, the mixed powder of cellulose and polyvinylalcohol (feeding speed = 660 g/h) and the liquefied NMMO (89°C, mono-hydrate, water content: 13%, feeding speed = 6000 g/h) were introduced into a twin-extruder (diameter of the screws (D) = 48mm, L/D = 52), the mixture was dissolved homogeneously with the screw speed of 120 rpm, and then the dissolved mixture was spun through the spinning nozzles (diameter: 0.2 mm, orifice: 1000 ea) into a solidifying bath.

At this time, the solidifying liquid contained in the solidifying bath was an aqueous solution including 0.5 wt% of epichlorohydrin and 20 wt% of the NMMO, and the temperature thereof was maintained at 25 °C.

After solidifying and cross-linking the composite fibers at the same time in the solidifying bath, the composite fibers were washed and dried so as to prepare the cellulose/polyvinylalcohol composite fibers.

### Example 6

The composite fibers were prepared substantially according to the same method as in Example 5, except that the weight ratio of the cellulose and the polyvinylalcohol was 90:10.

### Example 7

The composite fibers were prepared substantially according to the same method as in Example 5, except that the weight ratio of the cellulose and the polyvinylalcohol was 80:20.

### Comparative Example 6

The composite fibers were prepared substantially according to the same method as in Example 5, except that the temperature of the solidifying bath was 0°C.

### Comparative Example 7

The composite fibers were prepared substantially according to the same method as in Example 5, except that the solidifying liquid was an aqueous solution including 20 wt% of the NMMO without including the cross-linking agent.

### Comparative Example 8

The composite fibers were prepared substantially according to the same method as in Example 5, except that the solidifying liquid was an aqueous solution including 0.05 wt% of the epichlorohydrin and 20 wt% of the NMMO.

### Comparative Example 9

The composite fibers were prepared substantially according to the same method as in Example 5, except that the weight ratio of the cellulose and the polyvinylalcohol was 99.5:0.5.

### Comparative Example 10

The composite fibers were prepared substantially according to the same method as in Example 5, except that the weight ratio of the cellulose and the polyvinylalcohol was 65:35.

**[Experimental Example 2]**

The properties (elution rate of PVA, dry strength, dry elongation, dry modulus, and so on) of the cellulose/ polyvinylalcohol composite fibers prepared by Examples 5-7 and Comparative Examples 6-10 were measured substantially according to the same method as disclosed above, and the results are listed in Table 2. The composite fibers were conditioned at 25°C and 65 RH% for 24 hours.

[Table 2]

| classification | Example 5 | Example 6 | Example 7 | Comparative Example 6 | Comparative Example 7 | Comparative Example 8 | Comparative Example 9 | Comparative Example 10 |
|---|---|---|---|---|---|---|---|---|
| Weight ratio of cellulose /PVA | 95/5 | 95/10 | 80/20 | 95/5 | 95/5 | 9515 | 99.5 /0.5 | 65/35 |
| Concentration of the cross-linking agent (wt%) | 0.5 | 0.5 | 0.5 | 0.5 | - | 0.05 | 0.5 | 0.5 |
| Temperature of the solidifying liquid (°C) | 15 | 15 | 15 | 0 | 15 | 15 | 15 | 15 |
| Elution rate of PVA (%) | 0 | 0 | 0 | 2 | 10 | 5 | 0 | 0 |
| Dry strength (g/d) | 7.0 | 7.9 | 8.2 | 7.5 | 6.0 | 6.0 | 6.0 | 5.4 |
| Dry modulus (g/d) | 140 | 139 | 140 | 140 | 123 | 155 | 136 | 130 |
| Dry elongation (%) | 9.2 | 10.8 | 11.9 | 8.5 | 5 | 5 | 7.1 | 8.5 |
| Industrial value High: ◎ Middle: O Low: Δ | ◎ | ◎ | ◎ | O | Δ | O | Δ | Δ |

As shown in Table 2, the polyvinylalcohol was not eluted at all in Examples 5-7, and the composite fibers thereof had good properties that were suitable for a tire cord, because the spun composite fiber was solidified and cross-linked at the same time in the solidifying bath.

On the other hand, in Comparative Example 6, in which the temperature of the solidifying bath was below the preferable range, Comparative Example 7, in which the solidifying liquid did contain the cross-linking agent, and Comparative Example 8, in which the content of the cross-linking agent was below the preferable range, the polyvinylalcohol was eluted during the washing process and the properties of the fibers were poor, because the fibers had a low degree of cross-linking or did not cross-link. Furthermore, the composite fibers of Comparative Examples 9 and 10, in which the mixing ratio of the raw material mixture was out of the preferable range, had poor properties in comparison with the fibers of Examples 5 to 7.

As shown above, the present invention has advantages that the elution rate of PVA in the washing step is low and it is easy to collect and recycle the solvent, and the properties of the composite fiber, such as dry strength, dry elongation, dry modulus, and so on, are equal to or superior than the conventional cellulose fibers, on account of using the syndiotactic polyvinyl alcohol having a high degree of saponification or cross-linking the components of the spun composite fibers during the step of solidifying the spun composite fibers.

## Claims

1. A method of preparing a cellulose/polyvinylalcohol composite fiber, including the steps of:

    i) preparing a dope including cellulose and polyvinylalcohol in a weight ratio of 70:30 to 99:1 by dissolving a powder mixture of cellulose and polyvinylalcohol into N-methylmorpholine-N-oxide;
    ii) extrusion spinning the dope through spinning nozzles;
    iii) cross-linking and solidifying the spun composite filaments at a temperature of from 5 to 35 °C, wherein the cross-linking and solidifying are carried out in a solidifying bath containing a cross-linking agent included in the amount of from 0.1 to 1 wt% in the solidifying liquid of the bath; and
    iv) washing the cross-linked and solidified filaments.

2. The method according to Claim 1, wherein the cross-linking agent is at least one selected from the group consisting of boric acid, epichlorohydrin, glutaraldehyde, and carboxylic acid.

3. The method according to Claim 1, wherein step iv) is carried out so that the elution rate of polyvinylalcohol calculated by the following Calculation Formula is 1 % or less:

[Calculation Formula]

$$Elution\ rate(\%) = \frac{weight\ of\ eluted\ PVA\ in\ the\ washing\ bath}{weight\ of\ PVA\ in\ the\ mixture\ of\ raw\ material}.$$

4. The method according to Claim 1, wherein the content of syndiotactic diad groups in the polyvinylalcohol is from 48 to 60%, the degree of saponification thereof is at least 99.0%, and the viscosity-average degree of polymerization thereof is from 1500 to 7000.

## Patentansprüche

1. Verfahren zum Herstellen einer Zellulose/Polyvinylalkohol-Verbundfaser, enthaltend die Schritte:

    i) Herstellen eines Zellstoffs, enthaltend Zellulose und Polyvinylalkohol in einem Gewichtsverhältnis von 70:30 bis 99:1 durch Auflösen einer Pulvermischung aus Zellulose und Polyvinylalkohol in N-Methylmorpholin-N-oxid,
    ii) Extrusionsspinnen des Zellstoffs durch Spinndüsen,
    iii) Vernetzen und Verfestigen der gesponnenen Verbundfilamente bei einer Temperatur von 5 bis 35°C, wobei das Vernetzen und Verfestigen in einem Verfestigungsbad, welches ein Vernetzungsmittel in einer Menge von 0,1 bis 1 Gew.-% enthält, durchgeführt wird, und
    iv) Waschen der vernetzten und verfestigten Filamente.

**2.** Verfahren gemäß Anspruch 1, wobei das Vernetzungsmittel wenigstens eines ausgewählt aus der Gruppe, bestehend aus Borsäure, Epichlorhydrin, Glutaraldehyd und Carboxylsäure ist.

**3.** Verfahren gemäß Anspruch 1, wobei Schritt iv) derart durchgeführt wird, sodass die Elutionsrate an Polyvinylalkohol, berechnet durch die folgende Berechnungsformel, 1 % oder weniger beträgt:

$$[\text{Berechnungsformel}]$$

$$\text{Elutionsrate (\%)} = \frac{Gewicht\ an\ eluiertem\ PVA\ im\ Waschbad}{Gewicht\ an\ PVA\ in\ der\ Rohmaterialmischung}$$

**4.** Verfahren gemäß Anspruch 1, wobei der Gehalt an syndiotaktischen diadischen Gruppen in dem Polyvinylalkohol 48 bis 60 % beträgt, deren Verseifungsgrad wenigstens 99,0 % beträgt und deren viskositätsgemittelter Polymerisationsgrad 1500 bis 7000 beträgt.

**Revendications**

**1.** Procédé de préparation d'une fibre composite de cellulose/alcool polyvinylique, incluant les étapes consistant à :

i) préparer un dopant comprenant de la cellulose et un alcool polyvinylique selon rapport en poids de 70:30 à 99:1 par dissolution d'un mélange de poudre de cellulose et d'alcool polyvinylique dans du N-méthylmorpholine-N-oxyde ;
ii) filer par extrusion le dopant à travers des buses de filage ;
iii) réticuler est solidifier les filaments composites filés à une température de 5 à 35 °C, la réticulation et la solidification étant réalisées dans un bain de solidification contenant un agent de réticulation inclus en une quantité de 0,1 à 1 % en poids dans le liquide de solidification du bain ; et
iv) laver les filaments réticulés et solidifiés.

**2.** Procédé selon la revendication 1, dans lequel l'agent de réticulation est au moins un agent sélectionné dans le groupe constitué par l'acide borique, l'épichlorhydrine, le glutaraldéhyde, et l'acide carboxylique.

**3.** Procédé selon la revendication 1, dans lequel l'étape iv) est réalisée de sorte que la vitesse d'élution de l'alcool polyvinylique calculée à partir de la formule de calcul suivante est inférieure ou égale à 1 % :

$$\text{Formule de calcul}$$

$$\text{Vitesse d'élution (\%)} = \frac{\text{poids de PVA élué dans le bain de lavage}}{\text{poids de PVA dans le mélange de matières premières}}$$

**4.** Procédé selon la revendication 1, dans lequel la teneur en groupes diad syndiotactiques dans l'alcool poli vinylique est de 48 à 60 %, le degré de saponification de celui-ci est d'au moins 99,0 % et le degré de polymérisation moyen en viscosité de celui-ci est de 1500 à 7000.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2179181 A, Graenacher
- US 4142913 A
- US 4144080 A
- US 4211574 A
- US 5584919 A
- US 3447939 A
- US 3508941 A
- US 4255300 A
- US 6245837 B
- KR 20050003124

### Non-patent literature cited in the description

- **WON SEOK LYOO.** *Macromolecules,* 2001, vol. 34, 2964-2972
- **M. MARX.** *Makromol. Chem.,* 1955, vol. 16, 157
- **J. BRANDRUP ; E. H. IMMERGUT.** Polymer Handbook. Wiley-Interscience, vol. 144